# EUROPEAN PATENT SPECIFICATION

(11) **EP 3 451 151 B1**
(45) Date of publication and mention of the grant of the patent: **24.03.2021**
(21) Application number: 16899906.8
(22) Date of filing: 05.05.2016
(51) Int. Cl.: G06F 7/02

(54) **APPARATUS AND METHOD FOR EXECUTING VECTOR COMPARISON OPERATION**
VORRICHTUNG UND VERFAHREN ZUM AUSFÜHREN VON VEKTORVERGLEICHSOPERATIONEN
APPAREIL ET PROCÉDÉ D'EXÉCUTION D'OPÉRATION DE COMPARAISON VECTORIELLE

(30) Priority: 26.04.2016 CN 201610266782
(43) Date of publication of application: 06.03.2019
(73) Proprietor: Cambricon Technologies Corporation Limited, Beijing 100190 (CN)
(72) Inventor: HAN, Dong, Beijing 100190 (CN); ZHANG, Xiao, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/081115
(87) International publication number: WO 2017/185395

(56) References cited:
- CN-A- 102 722 469
- CN-A- 102 750 133
- CN-A- 103 699 360
- CN-A- 104 699 458
- CN-A- 105 229 599
- US-A- 5 430 884
- US-A1- 2003 037 221
- US-B1- 6 904 510
- US-B1- 7 793 084
- Compaq: "VAX MACRO and Instruction Set Reference Manual", , 30 March 2001 (2001-03-30), XP055640485, Retrieved from the Internet: URL:http://h30266.www3.hpe.com/odl/vax/ops ys/vmsos73/vmsos73/4515/4515pro_036.html [retrieved on 2019-11-08]

## Description

### TECHNICAL FIELD

This disclosure relates to the technical field of computer instruction operations, and more particularly to an apparatus and a method for executing a comparison operation on vectors.

### BACKGROUND

A vector comparison operation can be executed by comparing corresponding elements of two vectors of the same length, and a comparison result can constitute a new output vector. In the field of deep learning, there exists a requirement for executing comparison operations on two vectors. In a restricted Boltzmann machine of an artificial neural network, some operations are needed. For example, a vector composed of a group of neurons needs to be sampled; that is, compare each neuron in the vector with a random number. If a value of one neuron is greater than the random number, a result of comparison is taken as 1; otherwise, a result of comparison is taken as 0. For another example, when converting a 32-bit single-precision floating-point number into a 16-bit half-precision floating-point number, a truncated part of the 32-bit single-precision floating-point number needs to be compared with a random number satisfying a certain distribution if adopting a random carry method; if a bit of the truncated part is greater than the random number, the bit will be carried by 1. In this case, a comparison operation is also required for the two vector data.

In the related art, one of the most common methods of executing a comparison operation on vectors is to compare elements of the vectors one by one on a general-purpose central processing unit (CPU), which is inefficient.

In another related art, a graphics processing unit (GPU) may be used to execute a comparison operation on vectors. In this situation, the comparison operation can be executed by executing a general-purpose single instruction multiple data (SIMD) instruction through a general-purpose register file and a general-purpose flow processing unit. However, because on-chip cache of the GPU is too small, it is necessary to continuously move off-chip data when executing large-scale comparison operations. Therefore, an off-chip bandwidth will be a main trouble affecting the performance of the GPU.

Examples of related art may be found in US 5 430 884 A, US 7 793 084 B1, US 6 904 510 B1 and Compaq: "VAX MACRO and Instruction Set Reference Manual", 30 March 2001.

As can be seen, large-scale vector comparison operation operations cannot be efficiently executed by the existing general-purpose processors, or the GPU.

### SUMMARY

In view of the above, an apparatus and a method for executing a comparison operation on vectors are provided, which is capable of executing various comparison operations on vectors of different lengths according to instructions and has better running performance. The apparatus can execute a series of comparison operations on vectors according to the instructions, including but not limited to greater than or equal to operations, greater than operations, equal to operations, unequal to operations, less than operations, less than or equal to operations, and can flexibly support vector data of different lengths.

According to a first aspect of the disclosure, an apparatus for executing a comparison operation on vectors is provided. The apparatus includes a storing unit, a register unit, a control unit, and a vector comparing unit. The storing unit is configured to store vector data associated with a vector comparison operation instruction. The register unit is configured to store scalar data associated with the vector comparison operation instruction. The control unit is configured to decode the vector comparison operation instruction and to control an operation process of the vector comparison operation instruction. The vector comparing unit is configured to execute a vector comparison operation on two input vector data to be compared according to the vector comparison operation instruction decoded, where the vector comparing unit is implemented in a customized hardware circuit.

The scalar data stored in the register unit includes start addresses of the input vector data to be compared, a storage address of comparison result output vector data, and lengths of the input vector data to be compared associated with the vector comparison operation instruction, where the start addresses of the input vector data to be compared and the storage address of the comparison result output vector data are addresses in the storing unit.

In one implementation, the control unit includes an instruction queue module. The instruction queue module is configured to store sequentially the vector comparison operation instruction(s) decoded and to acquire the scalar data associated with the vector comparison operation instruction(s).

In one implementation, the control unit includes a dependency relationship processing unit. The dependency relationship processing unit is configured to determine whether a dependency relationship between a current vector comparison operation instruction and an operation instruction that has been partially executed exists before the vector comparing unit acquires the current vector comparison operation instruction.

In one implementation, the control unit includes a storage queue module. The storage queue module is configured to temporarily store a current vector comparison operation instruction when a dependency relationship between the current vector comparison operation instruction and an operation instruction that has been partially executed exists, and to send the current vector comparison operation instruction temporarily stored to the vector comparing unit when the dependency relationship is eliminated.

In one implementation, the apparatus further includes an instruction cache unit and an input-output (IO) unit. The instruction cache unit is configured to store a vector comparison operation instruction to be executed. The input-output (IO) unit is configured to store in the storing unit the vector data associated with the vector comparison operation instruction, or to acquire comparison result output vector data of the vector comparison operation instruction from the storing unit.

In one implementation, the vector comparison operation instruction includes an operation code and an operation field. The operation code is configured to indicate to execute a vector comparison operation. The operation field includes at least one of an immediate and a register number and is configured to indicate the scalar data associated with the vector comparison operation instruction, where the register number is configured to point to an address of the register unit.

In one implementation, the storing unit is a scratchpad memory.

As an illustrative example, an apparatus for executing a comparison operation on vectors is provided. The apparatus includes an instruction fetching module, a decoding module, an instruction queue module, a scalar register file, a dependency relationship processing unit, a storage queue module, a vector comparing unit, a scratchpad memory, and an input-output (IO) access module. The instruction fetching module is configured to fetch a next vector comparison operation instruction to be executed from a sequence of instructions and to send the vector comparison operation instruction to the decoding module. The decoding module is configured to decode the vector comparison operation instruction and to send the vector comparison operation instruction decoded to the instruction queue module. The instruction queue module is configured to temporarily store the vector comparison operation instruction decoded, to acquire scalar data associated with the vector comparison operation instruction from the vector comparison operation instruction or a scalar register, and to send the vector comparison operation instruction to the dependency relationship processing unit after the scalar data are acquired. The scalar register file includes a plurality of scalar registers and is configured to store the scalar data associated with the vector comparison operation instruction. The dependency relationship processing unit is configured to determine whether a dependency relationship between the vector comparison operation instruction and an operation instruction that has been partially executed exists, and to send the vector comparison operation instruction to the storage queue module based on a determination that the dependency relationship between the vector comparison operation instruction and the operation instruction that has been partially executed exists, or to send the vector comparison operation instruction to the vector comparing unit based on a determination that the dependency relationship between the vector comparison operation instruction and the operation instruction that has been partially executed does not exist. The storage queue module is configured to store the vector comparison operation instruction having the dependency relationship with the operation instruction that has been partially executed and to send the vector comparison operation instruction to the vector comparing unit after the dependency relationship is eliminated. The vector comparing unit is configured to execute a vector comparison operation on input vector data according to the vector comparison operation instruction. The scratchpad memory is configured to store input vector data to be compared and comparison result output vector data. The IO access module is configured to read out the input vector data to be compared from the scratchpad memory and to write the comparison result output vector data into the scratchpad memory by directly accessing the scratchpad memory.

In one implementation, the vector comparing unit is implemented in a customized hardware circuit.

As an illustrative example, a method for executing a comparison operation on vectors is provided. The method includes the following. An instruction fetching module fetches a next vector comparison operation instruction to be executed from a sequence of instructions and sends the vector comparison operation instruction to a decoding module. The decoding module decodes the vector comparison operation instruction and sends the vector comparison operation instruction decoded to an instruction queue module. The instruction queue module temporarily stores the vector comparison operation instruction decoded, acquires scalar data associated with the vector comparison operation instruction from the vector comparison operation instruction or a scalar register, and sends the vector comparison operation instruction to a dependency relationship processing unit after the scalar data are acquired. The dependency relationship processing unit determines whether a dependency relationship between the vector comparison operation instruction and an operation instruction that has been partially executed exists, and sends the vector comparison operation instruction to a storage queue module based on a determination that the dependency relationship between the vector comparison operation instruction and the operation instruction that has been partially executed exists, or sends the vector comparison operation instruction to a vector comparing unit based on a determination that the dependency relationship between the vector comparison operation instruction and the operation instruction that has been partially executed does not exist. The storage queue module stores the vector comparison operation instruction having the dependency relationship with the operation instruction that has been partially executed and sends the vector comparison operation instruction to the vector comparing unit after the dependency relationship is eliminated. The vector comparing unit reads out input vector data to be compared from a scratchpad memory via an input-output (IO) access module according to the vector comparison operation instruction, executes a vector comparison operation on the input vector data to be compared, and writes a comparison result output vector data into the scratchpad memory via the IO access module.

According to the apparatus and the method of the disclosure, a complete process of the vector comparison operation instruction can be realized by the customized hardware circuit, that is, the vector comparison operation can be realized by one vector comparison operation instruction. In the embodiments of the disclosure, the vector data participating in the operation can be temporarily stored in the scratchpad memory, so that the vector data of different lengths can be more flexibly and effectively supported in the operation process, and the customized vector comparing unit can more efficiently implement various comparison operations. The instructions used in the present disclosure are convenient to use.

The disclosure can be applied to the following scenarios (including but not limited to): various electronic products such as data processors, robots, computers, printers, scanners, telephones, tablets, smart terminals, mobile phones, driving recorders, navigators, sensors, cameras, cloud servers, cameras, camcorders, projectors, watches, earphones, mobile storages, and wearable devices; aircrafts, ships, cars, and other vehicles; various household appliances such as TVs, air conditioners, microwave ovens, refrigerators, rice cookers, humidifiers, washing machines, electric lights, gas stoves, and range hoods; various types of medical equipment such as nuclear magnetic resonance instruments, B-ultrasound, electrocardiographs, and so on.

### BRIEF DESCRIPTION OF THE DRAWINGS

FIG. 1 is a schematic structural diagram illustrating an apparatus for executing a comparison operation on vectors according to an embodiment of the disclosure.
FIG. 2 is a schematic diagram illustrating a format of a vector comparison operation instruction according to an embodiment of the disclosure.
FIG. 3 is a schematic structural diagram illustrating an apparatus for executing a comparison operation on vectors according to an embodiment of the disclosure.
FIG. 4 is a flow chart illustrating a process that the apparatus executes a vector comparison operation instruction according to an embodiment of the disclosure.

### DETAILED DESCRIPTION

To describe objects, technical solutions, and advantages of the embodiments of the present disclosure more clearly, the present disclosure will be further described in detail hereinafter with reference to the embodiments and in accordance with the accompanying drawings of the disclosure.

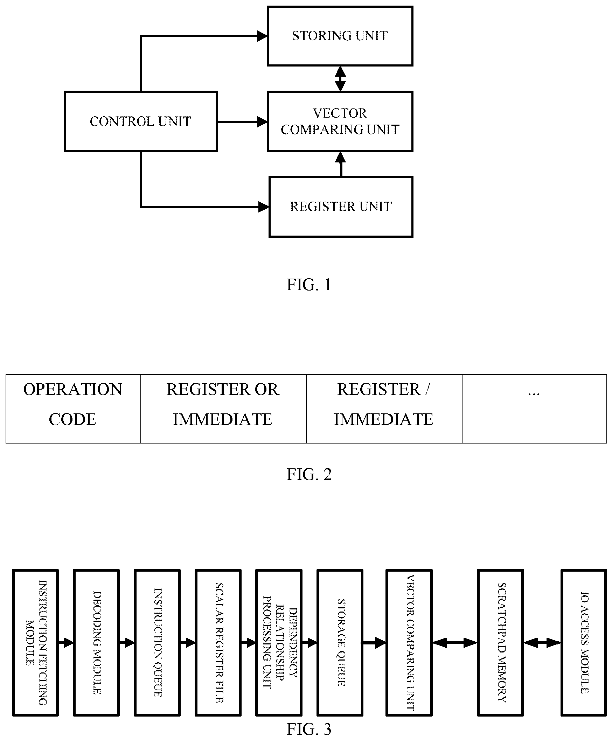

FIG. 1 is a schematic structural diagram illustrating an apparatus for executing a comparison operation on vectors according to an embodiment of the disclosure. As illustrated in FIG. 1, the apparatus includes a storing unit, a register unit, a control unit, and a vector comparing unit.

The storing unit is configured to store vector data associated with a vector comparison operation instruction. In one implementation, the storing unit may be a scratchpad memory that can support vector data of different sizes. In the embodiments of the disclosure, necessary computing data are temporarily stored in the scratchpad memory, such that the apparatus of the disclosure can further flexibly and efficiently support data of the different sizes during the vector comparison operation. The vector data associated with the vector comparison operation instruction includes input vector data to be compared and comparison result output vector data. In the embodiments of the disclosure, necessary computing data are temporarily stored in the scratchpad memory, such that the apparatus of the disclosure can further flexibly and efficiently support data of the different sizes during the vector comparison operation. The scratchpad memory can be implemented by a variety of different memory devices such as a static random-access memory (SRAM), a dynamic random access memory (DRAM), an enhanced dynamic random access memory (eDRAM), a memristor, 3D-DRAM, and a non-volatile memory.

The register unit is configured to store scalar data associated with the vector comparison operation instruction. The scalar data stored in the register unit include start addresses of the input vector data to be compared, lengths of the input vector data to be compared, a storage address of comparison result output vector data, and other related parameters, where the start addresses of the input vector data to be compared and the storage address of the comparison result output vector data are addresses in the storing unit. In one implementation, the register unit can be a scalar register file that can provide scalar registers needed during the operation. The scalar registers can store vector storage addresses, and can further store other scalar data.

The control unit is configured to decode the vector comparison operation instruction and to control an operation process of the vector comparison operation instruction. In particular, implementation of the operation process of the vector comparison operation instruction can be achieved by controlling behaviors in each module in the apparatus. In one implementation, the control unit can read out instructions prepared, decode the instructions to generate a control signal, and then send the control signal to other modules in the apparatus, and other modules can implement corresponding operations according to the control signal.

The vector comparing unit is configured to execute a specified comparison operation on input vector data according to the vector comparison operation instruction. The vector comparing unit can be a vector operating unit configured to implement the same operation on all input vector data. In one implementation, the vector comparing unit can acquire start addresses and lengths of two input vector data to be compared according to the vector comparison operation instruction, can acquire the two input vector data to be compared from the storing unit, and can compare corresponding elements in the two input vector data to be compared. After a comparison operation is satisfied, a corresponding position of comparison result output vector data can be set to 1; otherwise, a corresponding position of comparison result output vector data can be set to 0. In this way, the comparison result can be acquired. In this disclosure, the vector comparing unit can be implemented in a customized hardware circuit including but not limited to field programmable gate array (FPGA), coarse grained reconfigurable array (CGRA), application specific integrated circuit (ASIC), analog circuit, and memristor. The vector comparing unit can execute comparison operations of vectors of any length by cooperating with other modules in the apparatus.

According to the embodiments of the disclosure, the apparatus for executing a comparison operation on vectors is provided. According to the instructions, the comparison operation can be implemented, and addresses and lengths of the vectors can be acquired. The apparatus includes the storing unit, the register unit, the control unit, and the vector comparing unit. The vectors are stored in the storing unit. The storage addresses of the vectors and other scalar parameters are stored in the register unit. The control unit can be configured to implement decoding and to control each module according to the instruction. The vector comparing unit can be configured to acquire lengths, addresses, and other parameters of the vectors from the instruction or the register unit according to the instruction, to acquire corresponding vector data from the storing unit according to the addresses and the lengths, and then to execute a comparison operation on the vectors. In particular, the vector comparing unit can be configured to execute various comparison operations such as greater than or equal to operations, greater than operations, equal to operations, unequal to operations, less than operations, and less than or equal to operations according to different instructions. In the embodiments of the disclosure, the vector data participating in the operations can be temporarily stored in the scratchpad memory, such that the vector data of different lengths can be more flexibly and effectively supported in the operation process.

According to an implementation of the disclosure, the apparatus further includes an instruction cache unit. The instruction cache unit is configured to store a vector comparison operation instruction to be executed. The vector comparison operation instruction can be cached in the instruction cache unit during executing, and when execution of one instruction is completed, the instruction will be submitted.

FIG. 2 is a schematic diagram illustrating a format of a vector comparison operation instruction according to an embodiment of the disclosure. As illustrated in FIG. 2, the vector comparison operation instruction includes an operation code and a plurality of operation fields. The operation code is configured to indicate which vector comparison operation is to be executed, such as greater than or equal to operations, greater than operations, equal to operations, unequal to operations, less than operations, and less than or equal to operations. The operation field is configured to store the scalar data associated with the vector comparison operation instruction, where the scalar data includes at least one of an immediate and a register number and the register number is configured to point to an address of the register unit. The immediate and the register unit are configured to store start addresses input vector data to be compared, lengths of the input vector data to be compared, and a storage address of comparison result output vector data. According to the vector comparison operation instruction, the apparatus can acquire the scalar data associated with the vector comparison operation instruction from the vector comparison operation instruction or by accessing the register number provided by the vector comparison operation instruction. The start addresses of the input vector data to be compared and the storage address of the comparison result output vector data are addresses in the storing unit.

According to an implementation of the disclosure, the control unit of the apparatus further includes an instruction queue module. The instruction queue module is configured to sequentially store the decoded vector comparison operation instruction(s) and to acquire the scalar data associated with the vector comparison operation instruction(s) through the operation field of the vector comparison operation instruction(s). The scalar data may include the start addresses and the lengths of the input vector data to be compared and the like. The instruction queue module is further configured to send the vector comparison operation instruction to a dependency relationship processing unit after the scalar data are attached to the vector comparison operation instruction.

According to an implementation of the disclosure, the control unit of the apparatus further includes a dependency relationship processing unit. The dependency relationship processing unit is configured to determine whether a dependency relationship between a vector comparison operation instruction and an operation instruction that has been partially executed exists before the vector comparing unit acquires the vector comparison operation instruction; that is, determine whether the vector comparison operation instruction and the previous operation instruction that has accessed a same storage address of a vector. If yes, the dependency relationship processing unit is configured to store the vector comparison operation instruction in a storage queue module and to send the vector comparison operation instruction to the vector comparing unit the previous operation instruction that has been partially executed is completed. Otherwise, the dependency relationship processing unit is configured to directly send the vector comparison operation instruction to the vector comparing unit. In particular, when vector comparison operation instructions access the scratchpad memory, a previous vector comparison operation instruction and a current vector comparison operation instruction may access a same storage space. To ensure the correctness of the execution result of the current vector comparison operation instruction, when detecting that there is a dependency relationship between the current vector operation instruction and data of the previous vector comparison operation instruction that has been partially executed, the current vector comparison operation instruction should wait in the storage queue module until the dependency relationship is eliminated.

According to an implementation of the disclosure, the control unit of the apparatus further includes a storage queue module. The storage queue module includes an ordered queue. A vector comparison operation instruction having a dependency relationship with data of the previous vector comparison operation instruction that has been partially executed is stored in the ordered queue until the dependency relationship is eliminated. The storage queue module is configured to send the vector comparison operation instruction to the vector comparing unit after the dependency relationship is eliminated.

According to an implementation of the disclosure, the apparatus further includes an input-output (IO) unit. The IO unit is configured to store vector data in the storing unit, or to acquire a vector comparison operation result from the storing unit. The IO unit can read out vector data from a memory or write vector data into the memory by directly accessing the storing unit.

According to an implementation of the disclosure, in the instruction design of the present disclosure, one comparison operation executed on vectors can be achieved by a single instruction.

According to the embodiments of the disclosure, during executing a comparison operation on vectors, the apparatus can fetch the instruction for decoding, send the instruction decoded to the instruction queue for storing, and acquire all parameters in the instruction according to the decoding result, where these parameters can be directly written into the operation field (that is immediate) of the instruction or can be read out from a specified register according to the register number of the operation field of the instruction. The advantage of using the register to store parameters is that there is no need to change the instruction itself. That is, most loops can be achieved by using the instruction to change the values in the register. It is possible to greatly save the number of instructions required for solving some practical problems. After all operands are obtained, the dependency relationship processing unit will determine whether a dependency relationship between data actually needed to be used by the instruction and data of the previous operation instruction exists, which will determine whether the instruction can be immediately sent to the vector comparing unit for executing. For example, once the instruction has the dependency relationship with the data of the previous operation instruction, the instruction will not be sent to the vector comparing unit for executing until the previous operation instruction the instruction depends on is completely executed. In the customized vector comparing unit, the instruction will be executed quickly, and the result, that is a generated random vector, will be written back to an address provided by the instruction, indicating that the execution of the instruction is completed.

The following describes several vector comparison operation instructions.

Greater Than or Equal To Operation Instruction (GE). According to the instruction, the apparatus can acquire parameters of the instruction from the instruction or by accessing the register number provided by the instruction, where the parameters include lengths of two vector data, start addresses of two vector data, and a storage address of output vector data. Then the apparatus can read out the two vector data, and the vector comparing unit of the apparatus can compare all elements at all positions in the two vector data. If a value of an element at a position, among the previous vector data, is greater than or equal to that at the corresponding position, among the latter vector data, a value of the comparison result vector data at this position can be set to 1, otherwise a value of the comparison result vector data at this position can be set to 0. After comparing all elements, a comparison result will be written back to a specified storage address of the scratchpad memory.

Less Than or Equal To Operation Instruction (LE). According to the instruction, the apparatus can acquire parameters of the instruction from the instruction or by accessing the register number provided by the instruction, where the parameters include lengths of vector data, start addresses of two vector data, and a storage address of output vector data. Then the apparatus can read out the two vector data, and the vector comparing unit of the apparatus can compare all elements at all positions in the two vector data. If a value of an element at a certain, among the previous vector data, is less than or equal to that at the corresponding position, among the latter vector data, a value of the comparison result vector data at this position is set to 1, otherwise a value of the comparison result vector data at this position is set to 0. After comparing all elements, a comparison result will be written back to a specified storage address of the scratchpad memory.

Greater Than Operation Instruction (GT). According to the instruction, the apparatus can acquire parameters of the instruction from the instruction or by accessing the register number provided by the instruction, where the parameters include lengths of vector data, start addresses of two vector data, and a storage address of output vector data. Then the apparatus can read out the two vector data, and the vector comparing unit of the apparatus can compare all elements at all positions in the two vector data. If a value of an element at a position, among the previous vector data, is greater than that at the corresponding position, among the latter vector data, a value of the comparison result vector data at this position is set to 1, otherwise a value of the comparison result vector data at this position is set to 0. After comparing all elements, a comparison result will be written back to a specified storage address of the scratchpad memory.

Less Than Operation Instruction (LT). According to the instruction, the apparatus can acquire parameters of the instruction from the instruction or by accessing the register number provided by the instruction, where the parameters include lengths of vector data, start addresses of two vector data, and a storage address of output vector data. Then the apparatus can read out the two vector data, and the vector comparing unit of the apparatus can compare all elements at all positions in the two vector data. If a value of an element at a position, among the previous vector data, is less than that at the corresponding position, among the latter vector data, a value of the comparison result vector data at this position is set to 1, otherwise a value of the comparison result vector data at this position is set to 0. After comparing all elements, a comparison result will be written back to a specified storage address of the scratchpad memory.

Equal to Operation Instruction (EQ). According to the instruction, the apparatus can acquire parameters of the instruction from the instruction or by accessing the register number provided by the instruction, where the parameters include lengths of vector data, start addresses of two vector data, and a storage address of output vector data. Then the apparatus can read out the two vector data, and the vector comparing unit of the apparatus can compare all elements at all positions in the two vector data. If a value of an element at a position, among the previous vector data, is equal to that at the corresponding position, among the latter vector data, a value of the comparison result vector data at this position is set to 1, otherwise a value of the comparison result vector data at this position is set to 0. After comparing all elements, a comparison result will be written back to a specified storage address of the scratchpad memory.

Unequal To Operation Instruction (UEQ). According to the instruction, the apparatus can acquire parameters of the instruction from the instruction or by accessing the register number provided by the instruction, where the parameters include lengths of vector data, start addresses of two vector data, and a storage address of output vector data. Then the apparatus can read out the two vector data, and the vector comparing unit of the apparatus can compare all elements at all positions in the two vector data. If a value of an element at a position, among the previous vector data, is unequal to that at the corresponding position, among the latter vector data, a value of the comparison result vector data at this position is set to 1, otherwise a value of the comparison result vector data at this position is set to 0. After comparing all elements, a comparison result will be written back to a specified storage address of the scratchpad memory.

To describe objects, technical solutions, and advantages of the embodiments of the present disclosure more clearly, the present disclosure will be further described in detail hereinafter with reference to the specific embodiments and in accordance with the accompanying drawings of the disclosure.

FIG. 3 is a schematic structural diagram illustrating an apparatus for executing a vector comparison operation on vectors according to an embodiment of the disclosure. As illustrated in FIG. 3, the apparatus includes an instruction fetching module, a decoding module, an instruction queue module, a scalar register file, a dependency relationship processing unit, a storage queue module, a vector comparing unit, a scratchpad memory, and an input-output (IO) access module.

The instruction fetching module is configured to fetch a next vector comparison operation instruction to be executed from a sequence of instructions and to send the vector comparison operation instruction to the decoding module.

The decoding module is configured to decode the vector comparison operation instruction and to send the vector comparison operation instruction decoded to the instruction queue module.

The instruction queue module is configured to temporarily store the vector comparison operation instruction from the decoding module, to acquire scalar data associated with the vector comparison operation instruction from the vector comparison operation instruction or a scalar register, where the scalar data include start addresses and lengths of the vector data and some scalar constants, and to send the vector comparison operation instruction to the dependency relationship processing unit after the scalar data are acquired.

The scalar register file is configured to provide scalar registers used in an operation process.

The dependency relationship processing unit is configured to determine whether a dependency relationship between the vector comparison operation instruction and an operation instruction that has been partially executed exists. The vector comparison operation instruction will access the scratchpad memory to acquire vector data to be compared, and a previous instruction and a current instruction may access a same storage space. To ensure the correctness of the execution result of the instruction, when detecting that the current instruction has a dependency relationship with data of the previous instruction, the current instruction may need to be sent to the storage queue module and wait until the dependency relationship is eliminated. That is, the dependency relationship processing unit is configured to detect whether a storage interval of input vector data of the current instruction and a storage interval of output vector data of the previous instruction that has been partially executed are overlapped, where the storage interval is determined according to start addresses and lengths of vector data. If the storage interval of the input vector data of the current instruction and the storage interval of the output vector data of the previous instruction that has been partially executed are overlapped, it means that the current instruction actually needs an execution result of the previous instruction as an input, so the current instruction cannot start execution until the previous instruction that has been partially executed is completed. In this process, the instruction is actually stored in the storage queue module temporarily.

The storage queue module includes an ordered queue. The instruction having the dependency relationship with the data of the previous instruction is stored in the ordered queue until the dependency relationship is eliminated. The storage queue module is configured to send the vector comparison operation instruction to the vector comparing unit after the dependency relationship is eliminated.

The vector comparing unit is configured to execute a comparison operation on two input vector data to be compared including but not limited to a greater than or equal to operation, a greater than operation, a less than or equal to operation, a less than operation, an equal to operation, or an unequal to operation, or the like. The vector comparing unit can be implemented in a customized hardware circuit.

The scratchpad memory is a temporary storage apparatus special for vector data and can support vector data of different sizes. The scratchpad memory is configured to store vector data to be compared and comparison result output vector data.

The IO access module is configured to read out data from the scratchpad memory or write data into the scratchpad memory by directly accessing the scratchpad memory.

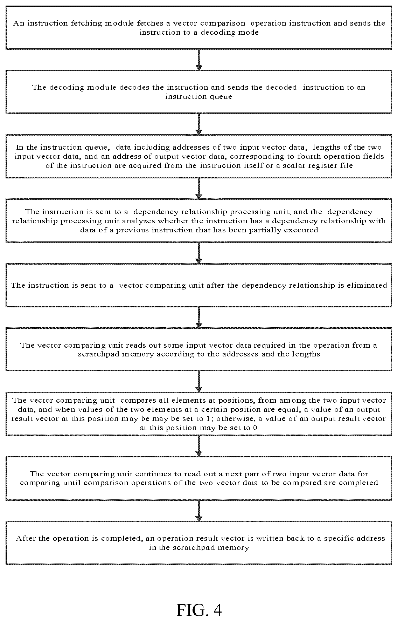

FIG. 4 is a flow chart illustrating a process of executing a vector comparison operation instruction by the apparatus according to an embodiment of the disclosure. As illustrated in FIG. 4, the process of executing the vector comparison operation instruction begins at SI.

At S1, an instruction fetching module fetches the vector comparison operation instruction and sends the vector comparison operation instruction to a decoding module.

At S2, the decoding module decodes the vector comparison operation instruction and sends the vector comparison operation instruction decoded to an instruction queue module.

At S3, the instruction queue module acquires required scalar data from the vector comparison operation instruction itself or a register file, that is, data corresponding to an operation field of the vector comparison operation instruction. The scalar data include start addresses of input vector data to be compared, lengths of the input vector data, and an address of output vector data.

At S4, after the required scalar data are acquired, the instruction queue module sends the vector comparison operation instruction to a dependency relationship processing unit.

At S5, the dependency relationship processing unit analyzes whether a dependency relationship between the vector comparison operation instruction and a previous instruction that has been partially executed exists. If yes, the dependency relationship processing unit sends the vector comparison operation instruction to a storage queue module to wait until the vector comparison operation instruction has no dependency relationship with data of the previous instruction that has been partially executed; otherwise, the dependency relationship processing unit directly sends the vector comparison operation instruction to a vector comparing unit.

At S6, the vector comparing unit reads out some vector data of the two vector data to be compared from a scratchpad memory, required in the comparison operation, according to the start addresses and lengths of the vector data to be compared.

At S7, the vector comparing unit simultaneously compares the elements at all positions in some vector data of the two vector data to be compared. When values of the two elements at a certain position are equal, a value of an output result vector at this position may be set to 1, otherwise, a value of an output result vector at this position may be set to 0.

At S8, turning back to operations at S6, the vector comparing unit continues to read out a next part of two vector data to be compared for comparing until comparison operations of the two vector data to be compared are completed.

At S9, after the operation is completed, an operation result vector is written back to a specific address in the scratchpad memory.

In summary, the apparatus for executing a comparison operation on vectors, cooperated with the corresponding instructions, can well solve more and more comparison tasks for vectors in the current computer field. Compared with the related solutions, the present disclosure can have the advantages of convenient use, flexible vector length supported, and sufficient on-chip cache.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. An apparatus for executing a comparison operation on vectors, comprising:
a storing unit, configured to store vector data associated with a vector comparison operation instruction;
a register unit, configured to store scalar data associated with the vector comparison operation instruction;
a control unit, configured to decode the vector comparison operation instruction and to control an operation process of the vector comparison operation instruction; and
a vector comparing unit, configured to execute a vector comparison operation on two input vector data to be compared according to the vector comparison operation instruction decoded;
the vector comparing unit being implemented in a customized hardware circuit;
**characterised in that** the scalar data stored in the register unit comprise start addresses of the input vector data to be compared, a storage address of comparison result output vector data, and lengths of the input vector data to be compared associated with the vector comparison operation instruction; wherein the start addresses of the input vector data to be compared and the storage address of the comparison result output vector data are addresses in the storing unit.

2. The apparatus of claim 1, the control unit comprising:
an instruction queue module, configured to store sequentially the vector comparison operation instruction decoded and to acquire the scalar data associated with the vector comparison operation instruction.

3. The apparatus of claim 1, the control unit comprising:
a dependency relationship processing unit, configured to determine whether a dependency relationship between a current vector comparison operation instruction and an operation instruction that has been partially executed exists before the vector comparing unit acquires the current vector comparison operation instruction.

4. The apparatus of claim 1, the control unit comprising:
a storage queue module, configured to temporarily store a current vector comparison operation instruction when a dependency relationship between the current vector comparison operation instruction and an operation instruction that has been partially executed exists, and to send the current vector comparison operation instruction temporarily stored to the vector comparing unit when the dependency relationship is eliminated.

5. The apparatus of any of claims 1 to 4, further comprising:
an instruction cache unit, configured to store a vector comparison operation instruction to be executed; and
an input-output (IO) unit, configured to store in the storing unit the vector data associated with the vector comparison operation instruction, or to acquire comparison result output vector data of the vector comparison operation instruction from the storing unit.

6. The apparatus of claim 1, the vector comparison operation instruction comprising:
an operation code, configured to indicate to execute a vector comparison operation; and
an operation field, comprising at least one of an immediate and a register number and configured to indicate the scalar data associated with the vector comparison operation instruction;
the register number being configured to point to an address of the register unit.

7. The apparatus of claim 6, wherein the operation code indicates an operation to be executed from the list of: greater than or equal to operations, GE, greater than operations, GT, equal to operations, EQ, unequal to operations, UEQ, less than operations, LT and less than or equal to operations, LE;
wherein the apparatus acquires parameters of the vector comparison operation instruction from the vector comparison operation instruction or by accessing the register number provided by the vector comparison operation instruction, wherein the parameters include lengths of vector data of the two vectors to be compared, start addresses of vector data of the two vectors to be compared, and a storage address of output vector data;
wherein the apparatus reads out vector data of the two vectors to be compared, and in the vector comparing unit, compares elements at all positions of the two vectors, and writes back a comparison result vector to the storage address of the storage unit; wherein the comparison between a first vector and a second vector of the two vectors to be compared made by the vector comparing unit comprises:
for the case that the operation code indicates GE, upon a value of the first vector at a position is greater than or equal to a value of the second vector at the position, a value of the comparison result vector at the position is set to 1, otherwise the value at the position is set to 0;
for the case that the operation code indicates GT, upon a value of the first vector at a position is greater than a value of the second vector at the position, a value of the comparison result vector at the position is set to 1, otherwise the value at the position is set to 0;
for the case that the operation code indicates EQ, upon a value of the first vector at a position is equal to a value of the second vector at the position, a value of the comparison result vector at the position is set to 1, otherwise the value at the position is set to 0;
for the case that the operation code indicates UEQ, upon a value of the first vector at a position is unequal to a value of the second vector at the position, a value of the comparison result vector at the position is set to 1, otherwise the value at the position is set to 0;
for the case that the operation code indicates LT, upon a value of the first vector of a position is less than a value of the second vector at the position, a value of the comparison result vector at the position is set to 1, otherwise the value at the position is set to 0;
for the case that the operation code indicates LE, upon a value of the first vector of a position is less than or equal to a value of the second vector at the position, a value of the comparison result vector at the position is set to 1, otherwise the value at the position is set to 0.

8. The apparatus of claim 1, wherein apparatus further includes an input-output, IO, unit, wherein the IO unit is configured to store vector data in the storing unit, or to acquire a vector comparison operation result from the storing unit, wherein the IO unit can read out vector data from a memory or write vector data into the memory by directly accessing the storing unit.

9. The apparatus of any one of claims 1-8, wherein the storing unit is a scratchpad memory.

10. A method for executing a comparison operation on vectors by an apparatus, comprising:
storing, by a storing unit, vector data associated with a vector comparison operation instruction;
storing, by a register unit, scalar data associated with the vector comparison operation instruction;
decoding, by a control unit, the vector comparison operation instruction
controlling, by the control unit, an operation process of the vector comparison operation instruction; and
executing, by a vector comparing unit implemented in a customized hardware circuit, the vector comparison operation on two input vector data to be compared according to the vector comparison operation instruction decoded;
wherein the scalar data to be stored in the register unit comprise start addresses of the input vector data to be compared, a storage address of comparison result output vector data, and lengths of the input vector data to be compared associated with the vector comparison operation instruction; wherein the start addresses of the input vector data to be compared and the storage address of the comparison result output vector data are addresses in the storing unit.

11. The method of claim 10, further comprising
storing sequentially, by an instruction queue module, the vector comparison operation instruction decoded and acquiring the scalar data associated with the vector comparison operation instruction.

12. The method of claim 10, further comprising:
determining, by a dependency relationship processing unit, whether a dependency relationship between a current vector comparison operation instruction and an operation instruction that has been partially executed exists before the vector comparing unit acquires the current vector comparison operation instruction.

13. The method of claim 10, further comprising:
temporarily storing, by a storage queue module, a current vector comparison operation instruction when a dependency relationship between the current vector comparison operation instruction and an operation instruction that has been partially executed exists, and sending the current vector comparison operation instruction temporarily stored to the vector comparing unit when the dependency relationship is eliminated.

14. The method of claim 10, wherein the vector comparison operation instruction comprising:
an operation code, configured to indicate to execute a vector comparison operation; and
an operation field, comprising at least one of an immediate and a register number and configured to indicate the scalar data associated with the vector comparison operation instruction; the register number being configured to point to an address of the register unit.

15. The method of claim 14, wherein the operation code indicates an operation to be executed from the list of: greater than or equal to operations, GE, greater than operations, GT, equal to operations, EQ, unequal to operations, UEQ, less than operations, LT and less than or equal to operations, LE; the method comprising the steps of:
acquiring, by the apparatus, parameters of the vector comparison operation instruction from the vector comparison operation instruction or by accessing the register number provided by the vector comparison operation instruction, wherein the parameters include lengths of vector data of the two vectors to be compared, start addresses of vector data of the two vectors to be compared, and a storage address of output vector data;
reading out, by the apparatus, vector data of the two vectors to be compared, and in the vector comparing unit, comparing elements at all positions of the two vectors, and writing back a comparison result vector to the storage address of the storage unit;
wherein the step of comparing elements at all positions of a first vector and a second vector of the two vectors comprises:
for the case that the operation code indicates GE, upon a value of the first vector at a position is greater than or equal to a value of the second vector at the position, setting a value of the comparison result vector at the position to 1, and otherwise setting the value at the position to 0;
for the case that the operation code indicates GT, upon a value of the first vector at a position is greater than a value of the second vector at the position, setting a value of the comparison result vector at the position to 1, and otherwise setting the value at the position to 0;
for the case that the operation code indicates EQ, upon a value of the first vector at a position is equal to a value of the second vector at the position, setting a value of the comparison result vector at the position to 1, and otherwise setting the value at the position to 0;
for the case that the operation code indicates UEQ, upon a value of the first vector at a position is unequal to a value of the second vector at the position, setting a value of the comparison result vector at the position to 1, and otherwise setting the value at the position to 0;
for the case that the operation code indicates LT, upon a value of the first vector of a position is less than a value of the second vector at the position, setting a value of the comparison result vector at the position to 1, and otherwise setting the value at the position to 0;
for the case that the operation code indicates LE, upon a value of the first vector of a position is less than or equal to a value of the second vector at the position, setting a value of the comparison result vector at the position to 1, and otherwise setting the value at the position to 0.

## Patentansprüche

1. Vorrichtung zum Ausführen einer Vergleichsoperation an Vektoren, Folgendes umfassend:
eine Speichereinheit, die dazu ausgelegt ist, mit einem Vektorvergleichsoperationsbefehl verbundene Vektordaten zu speichern;
eine Registereinheit, die dazu ausgelegt ist, mit dem Vektorvergleichsoperationsbefehl verbundene Skalardaten zu speichern;
eine Steuereinheit, die dazu ausgelegt ist, den Vektorvergleichsoperationsbefehl zu decodieren und einen Operationsprozess des Vektorvergleichsoperationsbefehls zu steuern; und
eine Vektorvergleichseinheit, die dazu ausgelegt ist, eine Vektorvergleichsoperation an zwei zu vergleichenden Eingangsvektordaten gemäß dem decodierten Vektorvergleichsoperationsbefehl auszuführen;
wobei die Vektorvergleichseinheit in einer benutzerdefinierten Hardwareschaltung implementiert ist; **dadurch gekennzeichnet, dass**
die in der Registereinheit gespeicherten Skalardaten Anfangsadressen der zu vergleichenden Eingangsvektordaten, eine Speicheradresse von Vergleichsergebnis-Ausgangsvektordaten und Längen der zu vergleichenden Eingangsvektordaten umfassen, die mit dem Vektorvergleichsoperationsbefehl verbunden sind;
wobei die Anfangsadressen der zu vergleichenden Eingangsvektordaten und die Speicheradresse der Vergleichsergebnis-Ausgangsvektordaten Adressen in der Speichereinheit sind.

2. Vorrichtung nach Anspruch 1, wobei die Steuereinheit Folgendes umfasst:
ein Befehlswarteschlangenmodul, das dazu ausgelegt ist, den decodierten Vektorvergleichsoperationsbefehl sequenziell zu speichern und die mit dem Vektorvergleichsoperationsbefehl verbundenen Skalardaten zu erfassen.

3. Vorrichtung nach Anspruch 1, wobei die Steuereinheit Folgendes umfasst:
eine Abhängigkeitsbeziehungs-Verarbeitungseinheit, die dazu ausgelegt ist zu ermitteln, ob eine Abhängigkeitsbeziehung zwischen einem aktuellen Vektorvergleichsoperationsbefehl und einem Operationsbefehl, der teilweise ausgeführt worden ist, existiert, bevor die Vektorvergleichseinheit den aktuellen Vektorvergleichsoperationsbefehl erfasst.

4. Vorrichtung nach Anspruch 1, wobei die Steuereinheit Folgendes umfasst:
ein Speicherwarteschlangenmodul, das dazu ausgelegt ist, einen aktuellen Vektorvergleichsoperationsbefehl vorübergehend zu speichern, wenn eine Abhängigkeitsbeziehung zwischen dem aktuellen Vektorvergleichsoperationsbefehl und einem Operationsbefehl, der teilweise ausgeführt worden ist, existiert, und den aktuellen Vektorvergleichsoperationsbefehl, der vorübergehend gespeichert wird, zu der Vektorvergleichseinheit zu senden, wenn die Abhängigkeitsbeziehung eliminiert wird.

5. Vorrichtung nach einem der Ansprüche 1 bis 4, ferner Folgendes umfassend:
eine Befehlscache-Einheit, die dazu ausgelegt ist, einen auszuführenden Vektorvergleichsoperationsbefehl zu speichern; und
eine Eingabe-Ausgabe (IO)-Einheit, die dazu ausgelegt ist, die mit dem Vektorvergleichsoperationsbefehl verbundenen Vektordaten in der Speichereinheit zu speichern, oder Vergleichsergebnis-Ausgangsvektordaten des Vektorvergleichsoperationsbefehls von der Speichereinheit zu erfassen.

6. Vorrichtung nach Anspruch 1, wobei der Vektorvergleichsoperationsbefehl Folgendes umfasst:
einen Operationscode, der dazu ausgelegt ist, die Ausführung einer Vektorvergleichsoperation anzugeben; und
ein Operationsfeld, das mindestens ein Element eines Immediate (Sofortwert) und einer Registernummer umfasst und dazu ausgelegt ist, die mit dem Vektorvergleichsoperationsbefehl verbundenen Skalardaten anzugeben; wobei die Registernummer dazu ausgelegt ist, auf eine Adresse der Registereinheit zu zeigen.

7. Vorrichtung nach Anspruch 6, wobei der Operationscode eine auszuführende Operation von der Liste der folgenden Punkte angibt: größer als oder gleich den Operationen (GE), größer als die Operationen (GT), gleich den Operationen (EQ), ungleich den Operationen (UEQ), kleiner als die Operationen (LT); und kleiner als oder gleich den Operationen (LE);
wobei die Vorrichtung Parameter des Vektorvergleichsoperationsbefehls von dem Vektorvergleichsoperationsbefehl oder durch Zugreifen auf die durch den Vektorvergleichsoperationsbefehl bereitgestellte Registernummer erfasst, wobei die Parameter Längen von Vektordaten der zwei zu vergleichenden Vektoren, Anfangsadressen von Vektordaten der zwei zu vergleichenden Vektoren, und eine Speicheradresse von Ausgangsvektordaten enthalten; wobei die Vorrichtung Vektordaten der zwei zu vergleichenden Vektoren ausliest und in der Vektorvergleichseinheit Elemente an allen Positionen der beiden Vektoren vergleicht und einen Vergleichsergebnisvektor an die Speicheradresse der Speichereinheit zurückschreibt; wobei der von der Vektorvergleichseinheit durchgeführte Vergleich zwischen einem ersten Vektor und einem zweiten Vektor der zwei zu vergleichenden Vektoren Folgendes umfasst:
für den Fall, dass der Operationscode GE angibt, wird auf die Feststellung, dass ein Wert des ersten Vektors an einer Position größer als oder gleich einem Wert des zweiten Vektors an der Position ist, ein Wert des Vergleichsergebnisvektors an der Position auf 1 gesetzt, anderenfalls wird der Wert an der Position auf 0 gesetzt;
für den Fall, dass der Operationscode GT angibt, wird auf die Feststellung, dass ein Wert des ersten Vektors an einer Position größer als ein Wert des zweiten Vektors an der Position ist, ein Wert des Vergleichsergebnisvektors an der Position auf 1 gesetzt, anderenfalls wird der Wert an der Position auf 0 gesetzt;
für den Fall, dass der Operationscode EQ angibt, wird auf die Feststellung, dass ein Wert des ersten Vektors an einer Position gleich einem Wert des zweiten Vektors an der Position ist, ein Wert des Vergleichsergebnisvektors an der Position auf 1 gesetzt, anderenfalls wird der Wert an der Position auf 0 gesetzt;
für den Fall, dass der Operationscode UEQ angibt, wird auf die Feststellung, dass ein Wert des ersten Vektors an einer Position ungleich einem Wert des zweiten Vektors an der Position ist, ein Wert des Vergleichsergebnisvektors an der Position auf 1 gesetzt, anderenfalls wird der Wert an der Position auf 0 gesetzt;
für den Fall, dass der Operationscode LT angibt, wird auf die Feststellung, dass ein Wert des ersten Vektors einer Position kleiner als ein Wert des zweiten Vektors an der Position ist, ein Wert des Vergleichsergebnisvektors an der Position auf 1 gesetzt, anderenfalls wird der Wert an der Position auf 0 gesetzt;
für den Fall, dass der Operationscode LE angibt, wird auf die Feststellung, dass ein Wert des ersten Vektors einer Position kleiner als oder gleich einem Wert des zweiten Vektors an der Position ist, ein Wert des Vergleichsergebnisvektors an der Position auf 1 gesetzt, anderenfalls wird der Wert an der Position auf 0 gesetzt.

8. Vorrichtung nach Anspruch 1, wobei die Vorrichtung ferner eine Eingabe-Ausgabe (IO)-Einheit aufweist, wobei die IO-Einheit dazu ausgelegt ist, Vektordaten in der Speichereinheit zu speichern, oder ein Vektorvergleichsoperationsergebnis von der Speichereinheit zu erfassen, wobei die IO-Einheit durch direktes Zugreifen auf die Speichereinheit Vektordaten von dem Speicher auslesen oder Vektordaten in den Speicher schreiben kann.

9. Vorrichtung nach einem beliebigen der Ansprüche 1-8, wobei die Speichereinheit ein Notizblockspeicher ist.

10. Verfahren zum Ausführen einer Vergleichsoperation an Vektoren durch eine Vorrichtung, Folgendes umfassend:
Speichern, durch eine Speichereinheit, von Vektordaten, die mit einem Vektorvergleichsoperationsbefehl verbunden sind;
Speichern, durch eine Registereinheit, von Skalardaten, die mit dem Vektorvergleichsoperationsbefehl verbunden sind;
Decodieren, durch eine Steuereinheit, des Vektorvergleichsoperationsbefehls,
Steuern, durch die Steuereinheit, eines Operationsprozesses des Vektorvergleichsoperationsbefehls; und
Ausführen, durch eine Vektorvergleichseinheit, die in einer benutzerdefinierten Hardwareschaltung implementiert ist, der Vektorvergleichsoperation an zwei zu vergleichenden Eingangsvektordaten gemäß dem decodierten Vektorvergleichsoperationsbefehl;
wobei die in der Registereinheit zu speichernden Skalardaten Anfangsadressen der zu vergleichenden Eingangsvektordaten, eine Speicheradresse von Vergleichsergebnis-Ausgangsvektordaten und Längen der zu vergleichenden Eingangsvektordaten umfassen, die mit dem Vektorvergleichsoperationsbefehl verbunden sind;
wobei die Anfangsadressen der zu vergleichenden Eingangsvektordaten und die Speicheradresse der Vergleichsergebnis-Ausgangsvektordaten Adressen in der Speichereinheit sind.

11. Verfahren nach Anspruch 10, ferner Folgendes umfassend:
sequenzielles Speichern, durch ein Befehlswarteschlangenmodul, des decodierten Vektorvergleichsoperationsbefehls, und Erfassen der mit dem Vektorvergleichsoperationsbefehl verbundenen Skalardaten.

12. Verfahren nach Anspruch 10, ferner Folgendes umfassend:
Ermitteln, durch eine Abhängigkeitsbeziehungs-Verarbeitungseinheit, ob eine Abhängigkeitsbeziehung zwischen einem aktuellen Vektorvergleichsoperationsbefehl und einem Operationsbefehl, der teilweise ausgeführt worden ist, existiert, bevor die Vektorvergleichseinheit den aktuellen Vektorvergleichsoperationsbefehl erfasst.

13. Verfahren nach Anspruch 10, ferner Folgendes umfassend:
vorübergehendes Speichern, durch ein Speicherwarteschlangenmodul, eines aktuellen Vektorvergleichsoperationsbefehls, wenn eine Abhängigkeitsbeziehung zwischen dem aktuellen Vektorvergleichsoperationsbefehl und einem Operationsbefehl, der teilweise ausgeführt worden ist, existiert, und Senden des vorübergehend gespeicherten aktuellen Vektorvergleichsoperationsbefehls an die Vektorvergleichseinheit, wenn die Abhängigkeitsbeziehung eliminiert wird.

14. Verfahren nach Anspruch 10, wobei der Vektorvergleichsoperationsbefehl Folgendes umfasst:
einen Operationscode, der dazu ausgelegt ist, die Ausführung einer Vektorvergleichsoperation anzugeben; und
ein Operationsfeld, das mindestens ein Element eines Immediate (Sofortwert) und einer Registernummer umfasst und dazu ausgelegt ist, die mit dem Vektorvergleichsoperationsbefehl verbundenen Skalardaten anzugeben; wobei die Registernummer dazu ausgelegt ist, auf eine Adresse der Registereinheit zu zeigen.

15. Verfahren nach Anspruch 14, wobei der Operationscode eine auszuführende Operation von der Liste der folgenden Punkte angibt: größer als oder gleich den Operationen (GE), größer als die Operationen (GT), gleich den Operationen (EQ), ungleich den Operationen (UEQ), kleiner als die Operationen (LT), und kleiner als oder gleich den Operationen (LE); wobei das Verfahren die folgenden Schritte umfasst:
Erfassen, durch die Vorrichtung, von Parametern des Vektorvergleichsoperationsbefehls von dem Vektorvergleichsoperationsbefehl oder durch Zugreifen auf die durch den Vektorvergleichsoperationsbefehl bereitgestellte Registernummer, wobei die Parameter Längen von Vektordaten der zwei zu vergleichenden Vektoren, Anfangsadressen von Vektordaten der zwei zu vergleichenden Vektoren, und eine Speicheradresse von Ausgangsvektordaten enthalten;
Auslesen, durch die Vorrichtung, von Vektordaten der zwei zu vergleichenden Vektoren, und Vergleichen, in der Vektorvergleichseinheit, von Elementen an allen Positionen der beiden Vektoren, und Zurückschreiben eines Vergleichsergebnisvektors an die Speicheradresse der Speichereinheit;
wobei der Schritt des Vergleichens von Elementen an allen Positionen eines ersten Vektors und eines zweiten Vektors der beiden Vektoren Folgendes umfasst:
für den Fall, dass der Operationscode GE angibt, wird auf die Feststellung, dass ein Wert des ersten Vektors an einer Position größer als oder gleich einem Wert des zweiten Vektors an der Position ist, ein Wert des Vergleichsergebnisvektors an der Position auf 1 gesetzt, und anderenfalls wird der Wert an der Position auf 0 gesetzt;
für den Fall, dass der Operationscode GT angibt, wird auf die Feststellung, dass ein Wert des ersten Vektors an einer Position größer als ein Wert des zweiten Vektors an der Position ist, ein Wert des Vergleichsergebnisvektors an der Position auf 1 gesetzt, und anderenfalls wird der Wert an der Position auf 0 gesetzt;
für den Fall, dass der Operationscode EQ angibt, wird auf die Feststellung, dass ein Wert des ersten Vektors an einer Position gleich einem Wert des zweiten Vektors an der Position ist, ein Wert des Vergleichsergebnisvektors an der Position auf 1 gesetzt, und anderenfalls wird der Wert an der Position auf 0 gesetzt;
für den Fall, dass der Operationscode UEQ angibt, wird auf die Feststellung, dass ein Wert des ersten Vektors an einer Position ungleich einem Wert des zweiten Vektors an der Position ist, ein Wert des Vergleichsergebnisvektors an der Position auf 1 gesetzt, und anderenfalls wird der Wert an der Position auf 0 gesetzt;
für den Fall, dass der Operationscode LT angibt, wird auf die Feststellung, dass ein Wert des ersten Vektors einer Position kleiner als ein Wert des zweiten Vektors an der Position ist, ein Wert des Vergleichsergebnisvektors an der Position auf 1 gesetzt, und anderenfalls wird der Wert an der Position auf 0 gesetzt;
für den Fall, dass der Operationscode LE angibt, wird auf die Feststellung, dass ein Wert des ersten Vektors einer Position kleiner als oder gleich einem Wert des zweiten Vektors an der Position ist, ein Wert des Vergleichsergebnisvektors an der Position auf 1 gesetzt, und anderenfalls wird der Wert an der Position auf 0 gesetzt.

## Revendications

1. Appareil pour exécuter une opération de comparaison sur des vecteurs, comprenant :
une unité de stockage, configurée pour stocker des données vectorielles associées à une instruction d'opération de comparaison vectorielle;
une unité de registre, configurée pour stocker des données scalaires associées à l'instruction d'opération de comparaison vectorielle;
une unité de commande, configurée pour décoder l'instruction d'opération de comparaison vectorielle et pour commander un processus d'opération de l'instruction d'opération de comparaison vectorielle; et
une unité de comparaison vectorielle, configurée pour exécuter une opération de comparaison vectorielle sur deux données vectorielles d'entrée à comparer conformément à l'instruction d'opération de comparaison vectorielle décodée;
l'unité de comparaison vectorielle étant mise en œuvre dans un circuit matériel personnalisé;
**caractérisé en ce que**
les données scalaires stockées dans l'unité de registre comprennent des adresses de début des données vectorielles d'entrée à comparer, une adresse de stockage des données vectorielles de sortie de résultat de comparaison, et des longueurs des données vectorielles d'entrée à comparer associées à l'instruction d'opération de comparaison vectorielle; dans lequel les adresses de début des données vectorielles d'entrée à comparer et l'adresse de stockage des données vectorielles de sortie de résultat de comparaison sont des adresses dans l'unité de stockage.

2. Appareil selon la revendication 1, l'unité de commande comprenant :
un module de file d'attente d'instructions, configuré pour stocker séquentiellement l'instruction d'opération de comparaison vectorielle décodée et pour acquérir les données scalaires associées à l'instruction d'opération de comparaison vectorielle.

3. Appareil selon la revendication 1, l'unité de commande comprenant :
une unité de traitement de relation de dépendance, configurée pour déterminer si une relation de dépendance entre une instruction d'opération de comparaison vectorielle courante et une instruction d'opération qui a été partiellement exécutée existe avant que l'unité de comparaison vectorielle n'acquière l'instruction d'opération de comparaison vectorielle courante.

4. Appareil selon la revendication 1, l'unité de commande comprenant :
un module de file d'attente de stockage, configuré pour stocker temporairement une instruction d'opération de comparaison vectorielle courante lorsqu'une relation de dépendance entre l'instruction d'opération de comparaison vectorielle courante et une instruction d'opération qui a été partiellement exécutée existe, et pour envoyer l'instruction d'opération de comparaison vectorielle courante stockée temporairement à l'unité de comparaison vectorielle lorsque la relation de dépendance est éliminée.

5. Appareil selon l'une quelconque des revendications 1 à 4, comprenant en outre :
une unité d'antémémoire d'instructions, configurée pour stocker une instruction d'opération de comparaison vectorielle à exécuter; et
une unité d'entrée-sortie (E/S), configurée pour stocker dans l'unité de stockage les données vectorielles associées à l'instruction d'opération de comparaison vectorielle, ou pour acquérir des données vectorielles de sortie de résultat de comparaison de l'instruction d'opération de comparaison vectorielle à partir de l'unité de stockage.

6. Appareil selon la revendication 1, l'instruction d'opération de comparaison vectorielle comprenant :
un code d'opération, configuré pour indiquer d'exécuter une opération de comparaison vectorielle; et
un champ d'opération, comprenant au moins l'un d'un numéro immédiat et d'un numéro de registre et configuré pour indiquer les données scalaires associées à l'instruction d'opération de comparaison vectorielle;
le numéro de registre étant configuré pour pointer vers une adresse de l'unité de registre.

7. Appareil selon la revendication 6, dans lequel le code d'opération indique une opération à exécuter à partir de la liste constituée de : supérieur ou égal aux opérations, GE, supérieur aux opérations, GT, égal aux opérations, EQ, non égal aux opérations, UEQ, inférieur aux opérations, LT, et inférieur ou égal aux opérations, LE ;
dans lequel l'appareil acquiert les paramètres de l'instruction d'opération de comparaison vectorielle à partir de l'instruction d'opération de comparaison vectorielle ou en accédant au numéro de registre fourni par l'instruction d'opération de comparaison vectorielle, dans lequel les paramètres comprennent des longueurs de données vectorielles des deux vecteurs à comparer, des adresses de début de données vectorielles des deux vecteurs à comparer, et une adresse de stockage des données vectorielles de sortie;
dans lequel l'appareil lit des données vectorielles des deux vecteurs à comparer, et dans l'unité de comparaison vectorielle, compare des éléments à toutes les positions des deux vecteurs, et réécrit un vecteur de résultat de comparaison à l'adresse de stockage de l'unité de stockage; dans lequel la comparaison entre un premier vecteur et un deuxième vecteur des deux vecteurs à comparer effectuée par l'unité de comparaison de vecteurs comprend :
pour le cas où le code d'opération indique GE, lorsqu'une valeur du premier vecteur à une position est supérieure ou égale à une valeur du deuxième vecteur à la position, une valeur du vecteur de résultat de comparaison à la position est mise à 1, sinon la valeur à la position est mise à 0;
pour le cas où le code d'opération indique GT, lorsqu'une valeur du premier vecteur à une position est supérieure à une valeur du deuxième vecteur à la position, une valeur du vecteur de résultat de comparaison à la position est mise à 1, sinon la valeur à la position est mise à 0;
pour le cas où le code d'opération indique EQ, lorsqu'une valeur du premier vecteur à une position est égale à une valeur du deuxième vecteur à la position, une valeur du vecteur de résultat de comparaison à la position est mise à 1, sinon la valeur à la position est mise à 0;
pour le cas où le code d'opération indique UEQ, lorsqu'une valeur du premier vecteur à une position est différente d'une valeur du deuxième vecteur à la position, une valeur du vecteur de résultat de comparaison à la position est mise à 1, sinon la valeur à la position est mise à 0;
pour le cas où le code d'opération indique LT, lorsqu'une valeur du premier vecteur d'une position est inférieure à une valeur du deuxième vecteur à la position, une valeur du vecteur résultat de comparaison à la position est mise à 1, sinon la valeur à la position est mise à 0;
pour le cas où le code d'opération indique LE, lorsqu'une valeur du premier vecteur d'une position est inférieure ou égale à une valeur du deuxième vecteur à la position, une valeur du vecteur résultat de comparaison à la position est mise à 1, sinon la valeur à la position est mise à 0.

8. Appareil selon la revendication 1, dans lequel l'appareil comprend en outre une unité d'entrée-sortie, E/S, dans lequel l'unité E/S est configurée pour stocker des données vectorielles dans l'unité de stockage, ou pour acquérir un résultat d'opération de comparaison vectorielle à partir de l'unité de stockage, dans lequel l'unité E/S peut lire des données vectorielles à partir d'une mémoire ou écrire des données vectorielles dans la mémoire en accédant directement à l'unité de stockage.

9. Appareil selon l'une quelconque des revendications 1 à 8, dans lequel l'unité de stockage est une mémoire à bloc-notes.

10. Procédé pour exécuter une opération de comparaison sur des vecteurs par un appareil, comprenant de :
stocker, par une unité de stockage, des données vectorielles associées à une instruction d'opération de comparaison vectorielle;
stocker, par une unité de registre, des données scalaires associées à l'instruction d'opération de comparaison vectorielle;
décoder, par une unité de commande, l'instruction d'opération de comparaison vectorielle;
commander, par l'unité de commande, un processus d'opération de l'instruction d'opération de comparaison vectorielle; et
exécuter, par une unité de comparaison vectorielle mise en œuvre dans un circuit matériel personnalisé, l'opération de comparaison vectorielle sur deux données vectorielles d'entrée à comparer conformément à l'instruction d'opération de comparaison vectorielle décodée;
dans lequel les données scalaires à stocker dans l'unité de registre comprennent des adresses de début des données vectorielles d'entrée à comparer, une adresse de stockage des données vectorielles de sortie de résultat de comparaison, et des longueurs des données vectorielles d'entrée à comparer associées à l'instruction d'opération de comparaison vectorielle; dans lequel les adresses de début des données vectorielles d'entrée à comparer et l'adresse de stockage des données vectorielles de sortie de résultat de comparaison sont des adresses dans l'unité de stockage.

11. Procédé selon la revendication 10, comprenant en outre de :
stocker séquentiellement, par un module de file d'attente d'instructions, l'instruction d'opération de comparaison vectorielle décodée et acquérir les données scalaires associées à l'instruction d'opération de comparaison vectorielle.

12. Procédé selon la revendication 10, comprenant en outre de :
déterminer, par une unité de traitement de relation de dépendance, si une relation de dépendance entre une instruction d'opération de comparaison vectorielle courante et une instruction d'opération qui a été partiellement exécutée existe avant que l'unité de comparaison vectorielle n'acquière l'instruction d'opération de comparaison vectorielle courante.

13. Procédé selon la revendication 10, comprenant en outre de :
stocker temporairement, par un module de file d'attente de stockage, une instruction d'opération de comparaison vectorielle courante lorsqu'une relation de dépendance entre l'instruction d'opération de comparaison vectorielle courante et une instruction d'opération qui a été partiellement exécutée existe, et envoyer l'instruction d'opération de comparaison vectorielle courante stockée temporairement à l'unité de comparaison vectorielle lorsque la relation de dépendance est éliminée.

14. Procédé selon la revendication 10, dans lequel l'instruction d'opération de comparaison vectorielle comprenant :
un code d'opération, configuré pour indiquer d'exécuter une opération de comparaison vectorielle; et
un champ d'opération, comprenant au moins l'un d'un numéro immédiat et d'un numéro de registre et configuré pour indiquer les données scalaires associées à l'instruction d'opération de comparaison vectorielle; le numéro de registre étant configuré pour pointer vers une adresse de l'unité de registre.

15. Procédé selon la revendication 14, dans lequel le code d'opération indique une opération à exécuter à partir de la liste constituée de : supérieur ou égal aux opérations, GE, supérieur aux opérations, GT, égal aux opérations, EQ, non égal aux opérations, UEQ, inférieur aux opérations, LT, et inférieur ou égal aux opérations, LE; le procédé comprenant les étapes consistant à :
acquérir, par l'appareil, des paramètres de l'instruction d'opération de comparaison vectorielle à partir de l'instruction d'opération de comparaison vectorielle ou en accédant au numéro de registre fourni par l'instruction d'opération de comparaison vectorielle, dans lequel les paramètres comprennent des longueurs de données vectorielles des deux vecteurs à comparer, des adresses de début de données vectorielles des deux vecteurs à comparer, et une adresse de stockage des données vectorielles de sortie;
lire, par l'appareil, des données vectorielles des deux vecteurs à comparer, et dans l'unité de comparaison vectorielle, comparer des éléments à toutes les positions des deux vecteurs, et réécrire un vecteur de résultat de comparaison à l'adresse de stockage de l'unité de stockage;
dans lequel l'étape de comparaison d'éléments à toutes les positions d'un premier vecteur et d'un deuxième vecteur des deux vecteurs comprend :
pour le cas où le code d'opération indique GE, lorsqu'une valeur du premier vecteur à une position est supérieure ou égale à une valeur du deuxième vecteur à la position, mettre une valeur du vecteur de résultat de comparaison à la position à 1, et sinon mettre la valeur à la position à 0;
pour le cas où le code d'opération indique GT, lorsqu'une valeur du premier vecteur à une position est supérieure à une valeur du deuxième vecteur à la position, mettre une valeur du vecteur de résultat de comparaison à la position à 1, et sinon mettre la valeur à la position à 0;
pour le cas où le code d'opération indique EQ, lorsqu'une valeur du premier vecteur à une position est égale à une valeur du deuxième vecteur à la position, mettre une valeur du vecteur de résultat de comparaison à la position à 1, et sinon mettre la valeur à la position à 0;
pour le cas où le code d'opération indique UEQ, lorsqu'une valeur du premier vecteur à une position est inégale à une valeur du deuxième vecteur à la position, mettre une valeur du vecteur de résultat de comparaison à la position à 1, et sinon mettre la valeur à la position à 0;
pour le cas où le code d'opération indique LT, lorsqu'une valeur du premier vecteur d'une position est inférieure à une valeur du deuxième vecteur à la position, mettre une valeur du vecteur de résultat de comparaison à la position à 1, et sinon mettre la valeur à la position à 0;
pour le cas où le code d'opération indique LE, lorsqu'une valeur du premier vecteur d'une position est inférieure ou égale à une valeur du deuxième vecteur à la position, mettre une valeur du vecteur résultat de comparaison à la position à 1, et sinon mettre la valeur à la position à 0.
